# EUROPEAN PATENT APPLICATION

(11) **EP 1 201 828 A2**
(43) Date of publication of application: **02.05.2002**
(21) Application number: 01309128.5
(22) Date of filing: 29.10.2001
(51) Int. Cl.: E02B 3/10

(54) **Method of disposing of used vehicle tyres**

(30) Priority: 27.10.2000 GB 0026344
(71) Applicant: Robinson, Anthony, Near Bridgwater, Somerset TA7 OJS (GB)
(72) Inventor: Robinson, Anthony, Near Bridgwater, Somerset TA7 OJS (GB)
(74) Representative: Pearson, James Ginn

(57) **Abstract**

A method of forming a shuttering (1) in moving water (4), such as the sea, includes the step of laying down a wall of vehicle tyres (2), the wall being at least ten tyres wide and at least five tyres tall, at least a significant fraction of the free space within the tyres of the wall subsequently being filled with solid matter, for example, silt, sand or other particulate material carried in the water. Thus, used vehicle tyres may be disposed in an environmentally-friendly and constructive manner. The shuttering may form the foundation for a concrete area (5) representing reclaimed land.

## Description

The present invention relates to a method of disposing of used vehicle tyres and in particular a new use of used vehicle tyres.

Vehicle tyres, once they have come to the end of their useful lifetime, need to be disposed of. In a country, such as the UK, millions of tyres may need to be disposed of in a given year. Tyres are by design generally hard wearing, are not biodegradable and are normally internally reinforced with metal wire. There are therefore problems associated with disposing of used tyres.

Commonly available methods can be expensive, time consuming and/or damaging to the environment. By way of example, methods used to dispose of tyres include burning, micro-waving, crumbing and dumping, each method having associated disadvantages. Burning tyres produces pollutants. To reduce the pollutants produced when burning, temperatures may be required in excess of 1500 degrees Celsius, and scrubbers, devices used to remove pollutants released when burning tyres, may be required. Such equipment is relatively expensive to provide and run. Micro-waving tyres is also a relatively expensive solution to the problem. The machinery needed to crumb tyres is also expensive and the method is relatively slow and is therefore expensive, owing to the amount or scale of the machinery required to dispose of used tyres at a sufficiently high rate to be economically viable. Dumping is also becoming a costly solution as suitable landfill sites are becoming fewer and many countries are now legislating against the use of conventional landfill sites for the dumping of used vehicle tyres. Dumping is also viewed as being damaging to the environment. Some used tyres are re-treaded (by remoulding for example) and then reused. However, a tyre can only be re-treaded a limited number of times, usually only once, and re-treading only defers the need to dispose of the tyres in another manner.

The present invention therefore seeks to provide a cost efficient method of disposing of used vehicle tyres preferably in a manner that is not damaging to the environment. The present invention also seeks to provide a new use for used tyres, such that used tyres that previously would have been disposed of in another manner can be used for a different beneficial purpose.

According to the present invention there is provided a method of forming a shuttering in moving water including the step of laying down a wall of vehicle tyres, the wall being at least ten tyres wide and at least five tyres tall, at least a significant fraction of the free space within the tyres of the wall subsequently being filled with solid matter. Thus the present invention provides a new use for used tyres and a method of disposing of such tyres. With the benefit of hindsight it may be considered that the notional problem to which the present invention seeks to provide a solution is how to improve shuttering for use in or near moving water.

The free space within the tyres of the wall may simply be considered as being the space in the wall that would otherwise be filled with water for more than half of the time. The fraction of free space filled with solid matter is preferably so great that the wall (or a portion greater than 50% of the wall) effectively becomes a unitary mass. The fraction of free space filled is preferably greater than 50%, more preferably greater than 75% and even more preferably greater than 85%. Alternatively, the free space within the tyres of the wall may be considered as consisting of the spaces within the individual tyres that would otherwise be filled with water for more than half of the time. Again, the fraction of free space so defined filled with solid matter is preferably greater than 50%, more preferably greater than 75% and even more preferably greater than 85%.

The shuttering thereby formed can act as a foundation on which to build. If the water in which the shuttering is formed is at sea, close to the coastline, the shuttering can act as a conventional sea wall, protecting, or at least reducing damage to, the coastline. For example, the shuttering when positioned on the coastline, where cliffs are close to the coast line, the shuttering may mitigate erosion of the cliffs by the sea. The shuttering has particular benefits when formed on a beach on the coast. The shape and form of the beach may, by virtue of the shuttering, be protected from erosion by the sea. For example, the shuttering may help reduce the amount of material moved from the beach by sea action.

The shuttering may be formed in water to reclaim land previously lost through flooding or erosion, for example, coastal erosion. The shuttering may be arranged such that the shuttering comprising two walls arranged either side of a channel. Such an arrangement may assist in keeping a channel open and preventing the channel from being blocked or clogged by deposition of silt or other particulate material carried by moving water in the channel. For example, such arrangement may be of particular benefit when used to keep a shipping channel open, especially in the case where the shipping channel is in tidal waters. In such an arrangement, the walls of the shuttering are preferably arranged in such a way as to increase the water flowing through the channel during tidal movements. Such increased water flow may assist in reducing the deposition of silt or other particulate material.

The shuttering may, for example, form the foundation for a marina or other coastal structure. The shuttering may alternatively be formed in other bodies of moving water, such as a river, or the like, for example to strengthen and/or protect the banks of the river. The shuttering formed need not of course be built on further. For example, if the shuttering is used as a sea defence wall and is completely submerged underwater almost all of the time, there may be no desire to form further structures on or next to the shuttering.

Sea-wall defences having simple shapes when viewed from above (for example, having flat sides) can act to protect a section of coast-line, whilst worsening the damage caused by waves to adjacent parts of the coastline. If the shuttering is formed as a sea wall defence system, the external surface of the shuttering exposed to incoming waves are preferably therefore so shaped to mitigate that effect. At least some portions of the external surface of the shuttering exposed to incoming waves are thus advantageously non-planar in shape. Preferably, the external surface is bumpy. The bumpiness of the external surface could, for example, be formed of tyres or other objects protruding from the external surface. The external surface may have portions that when viewed from above have a curved wave-like structure. The wave-length of the wave-like structure need not be constant. The wave-length may be between 1 and 5 metres. The wave-length chosen will, of course, depend on many factors including the local geography of the coast-line and sea where the shuttering is formed. The wave-length may be about 3 metres.

It will be understood that the wall need not be elongate in shape when viewed from above and that the width of the wall may be relatively large in comparison to its length. The shape of the wall when viewed from above may be any suitable shape in view of the surrounding environment and the shape of the shuttering desired to be formed. For example, the wall formed could, when viewed from above, be square in shape, or could be a rather complicated and irregular shape.

Preferably, all of the vehicle tyres used in building the wall are used tyres that would otherwise have been disposed of by other means.

Preferably, at least some the tyres used in the method have at least some tread left. The tread on the tyres assists the slowing of the water passing the tyres and therefore assists to break the incoming currents and aids the deposition and/or retention of the particulate matter.

The solid matter is preferably particulate matter, such as for example, sand, shingle, pebbles, small stones or other particulate material commonly found in moving water, for example, at coastlines.

Advantageously, the location of the shuttering and the arrangement of the tyres and the wall are so chosen that the wall is at least partially filled with particulate matter carried by water. For example, if the shuttering is formed in sea-water the particulate matter is advantageously is naturally present in and is carried by the sea-water. Preferably the arrangement of the tyres is such that the tyres act as a "vortex filter". The effect of the tyres acting as a vortex filter can be explained as follows. Water flowing past the tyres carries particulate matter in suspension. The water slows down as it passes the tyres. The shape of the tyres and the way in which they are stacked on top of each other causes vortexes in the water within the wall, further slowing the flow of water through and past the wall. As the flow of water is slowed, the particulate matter is deposited in the wall and falls down through the tyres, for example, through the centres of the tyres or through the gaps between adjacent tyres. Provided that the content of particulate matter in the moving water is high enough, the wall will over time become filled with enough particulate matter to improve significantly the structural integrity of the wall. The majority of the free space within the wall may be filled in this manner given the appropriate conditions.

The method may include a step of manually filling the wall with solid matter. Such a step may be necessary if conditions do not permit the filling of the wall by means of the matter carried naturally by the moving water (for example, the local geography is such that very little matter is carried by the water). Such matter may be retained by the wall by virtue of the vortex filter effect, in that the flow of water may in normal conditions have insufficient speed to pick up and carry off matter held within the wall.

The wall is preferably at least ten tyres wide and at least five tyres high along substantially the entire length of the wall. Preferably, at least a portion of the wall is at least twenty tyres wide and more preferably the average width along the length of the wall is at least twenty tyres. Preferably, at least a portion of the wall is at least ten tyres tall and more preferably the average height along the length of the wall is at least ten tyres.

The tyres of successive layers may overlap with the tyres of the layer immediately below. The tyres are advantageously so arranged that there are a multiplicity of pairs of tyres, wherein one tyre of each pair is arranged immediately above the other tyre of the pair, the respective axes of the tyres being spaced apart from one another by a distance between 10% and 40% of the sum of the diameters of the pair of tyres. More preferably, the minimum distance between the axes of two tyres in such a pair is about a third of their average diameter.

Preferably, the method includes a step of placing netting over a multiplicity of tyres thereby restricting their movement. Such netting may not be necessary once the wall is filled with particulate material, but can assist in restraining movement of tyres before the filling of the wall with particulate material. The netting may be in the form of wire netting, a wire mesh, a rigid cage like structure or any other suitable open retaining structure.

Advantageously, the method includes a step of laying down an anchor unit comprising a heavy body having connecting means formed integrally therewith for enabling tyres to be secured thereto. The anchor unit may be laid directly on to the surface (for example, the sea bed) on which the wall is to be formed. The heavy body advantageously acts to resist movement of the wall relative to the surface on which the anchor unit is laid. The heavy body may conveniently be made of concrete. The connecting means preferably comprises at least one tyre. Thus, the anchor unit may be in the form of a pre-cast concrete block partially encasing at least one tyre, the free end of the tyre forming at least a part of the connecting means.

The anchor unit advantageously provides a foundation on which further constructions may be built. The anchor unit may include a substantially horizontal base section that contacts the surface on which the anchor unit lies, the base section having an upper surface providing a foundation on which to build. The anchor unit may also have a substantially vertical section from which the connecting means of the anchor unit extend. The anchor unit may comprise both such a base section and a substantially vertical section, arranged such that the substantially vertical section extends from or close to one end of the base section, thereby forming an L-shape when viewed form the side. The connecting means may for example extend from the substantially vertical section from the opposite side to that from which the base section extends. The anchor unit may further comprise an upper section extending from or close to the upper end of the substantially vertical section. The upper section may extend from the same side of the substantially vertical section as the connecting means extends. For example, the anchor unit may be generally Z-shaped (in cross-section or when viewed from the side). Preferably, a multiplicity of anchor units are laid down one next to another, along at least a significant portion of the length of the wall to be formed.

The method preferably includes a step in which pairs of tyres are tied to each other. The pairs of tyres may be adjacent to one another, for example, in the same level in the wall or may alternatively be separated by a plurality of other tyres. For example, tyres on opposite sides of a portion of the wall may be tied together. The ties used may be substantially rigid. For example, the ties may be in the form of tie bars. Alternatively, the ties used may be flexible. For example, straps may be used to tie tyres together. Of course, a combination of flexible ties and rigid ties may be used in tying the tyres together.

The wall may include a substantially vertically arranged girder. The girder is preferably arranged so that it extends over the entire height of the wall. The girder may provide extra structural strength to the wall and advantageously facilitates further the construction of further structure on top of the wall so formed. The girder is conveniently arranged in position before the wall is filled with solid matter.

The wall may conveniently be built by laying down each layer of tyres in succession, tyres in a subsequent layer not being laid down until the majority of the tyres in the previous layer have been laid. When forming the shuttering at a coastline, the tyres are preferably laid when the tide is out, such that the tyres are not laid underwater. Of course, when the tide comes in, at least the tyres in the base layer are preferably underwater. It will therefore be understood that whilst the shuttering is formed in moving water, the shuttering need not be underwater all of the time and there may even be some parts of the shuttering that are never (or very seldom) underwater. Preferably, however, the wall is formed such that substantially all of the tyres in the wall are underwater at least some of the time.

As mentioned above, once the shuttering has been formed, it may be used as a foundation on which to build other structures. For example, exterior surfaces of the shuttering may be covered with a facing, which may enhance the structural strength of the shuttering or may simply make the shuttering appear more aesthetically pleasing to the eye. The facing may be formed of a plurality of facing units. The method may therefore include a step of fixing pre-formed facing units to at least a portion of the wall, thereby forming an exterior facing. The facing units may for example be made of concrete.

As described above, the present method therefore provides a means of disposing tyres in a safe and environmentally and/or ecologically friendly manner. The present invention thus provides a method of disposing of waste vehicle tyres comprising the steps of performing a method according to any aspect of the above-described invention.

The present invention yet further provides a shuttering comprising a wall of vehicle tyres, the wall being at least ten tyres wide and at least five tyres tall, at least a significant fraction of the free space within the wall subsequently being filled with solid matter. At least a part of the shuttering is advantageously under water. The shuttering may of course incorporate any of the features mentioned above with reference to the method of the invention. Thus, the shuttering may be formed as a result of having been built according to any aspects of the method of the above-described invention.

The present invention also further provides an anchor unit for use in any of the above-described aspects of the method of the invention incorporating the use of such an anchor unit.

By way of example, two embodiments of the invention will now be described with reference to the accompanying drawings, of which
- Figure 1: is a partially cut away perspective view of a shuttering formed at a coastline in accordance with a first embodiment of the invention,
- Figure 2a: is a schematic plan view of two layers of a wall of tyres forming the shuttering shown in Figure 1,
- Figure 2b: is a schematic cross-sectional view of a row of three of the tyres shown in Figure 2a,
- Figure 3: is a schematic cross-sectional side view of a portion of the shuttering shown in Fig. 1 including an anchor piece,
- Figure 4: is a schematic plan view of the shuttering shown in Fig. 1,
- Figure 5: is a schematic plan view of a shuttering formed in accordance with a second embodiment, and
- Figure 6: is a perspective view of a marine development built on shuttering formed in accordance with the second embodiment.

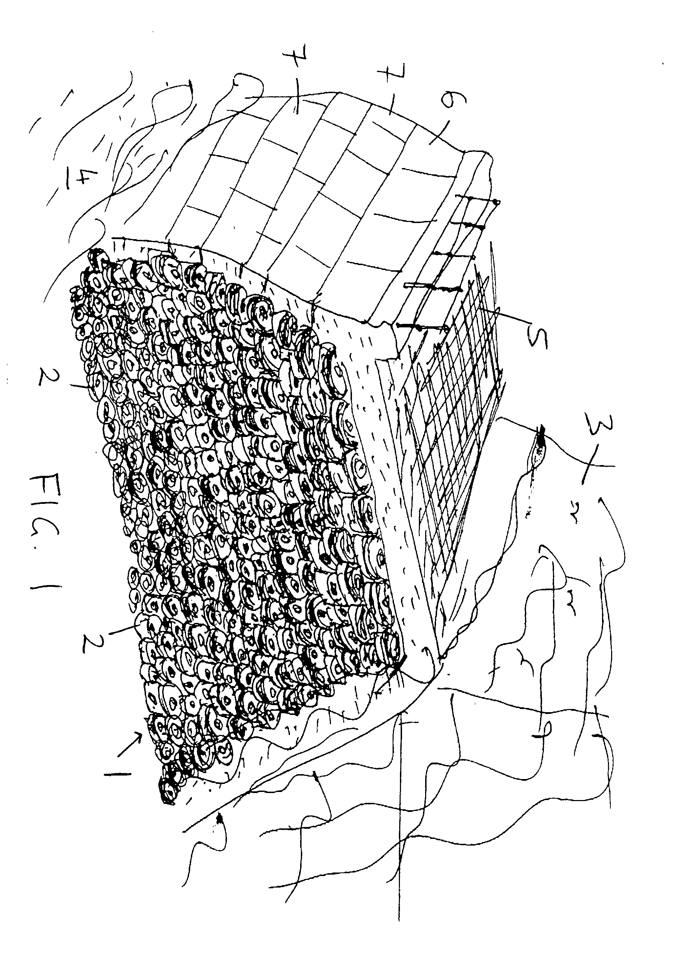

Figure 1 shows a shuttering 1 formed of a wall of used vehicle tyres 2 built on a coastline adjacent to a cliff 3 and next to the sea 4. The shuttering 1 forms the foundation for a concrete area 5 representing reclaimed land. The shuttering also supports a facing wall 6 formed of separate facing units 7 made of concrete. The shuttering 1 further protects the cliff 3 from coastal erosion.

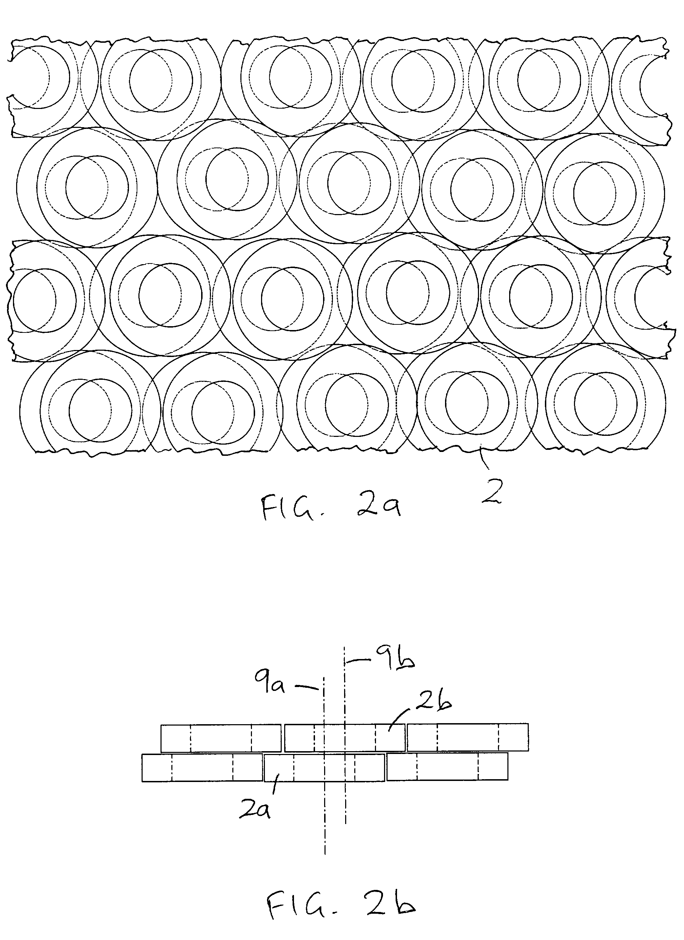

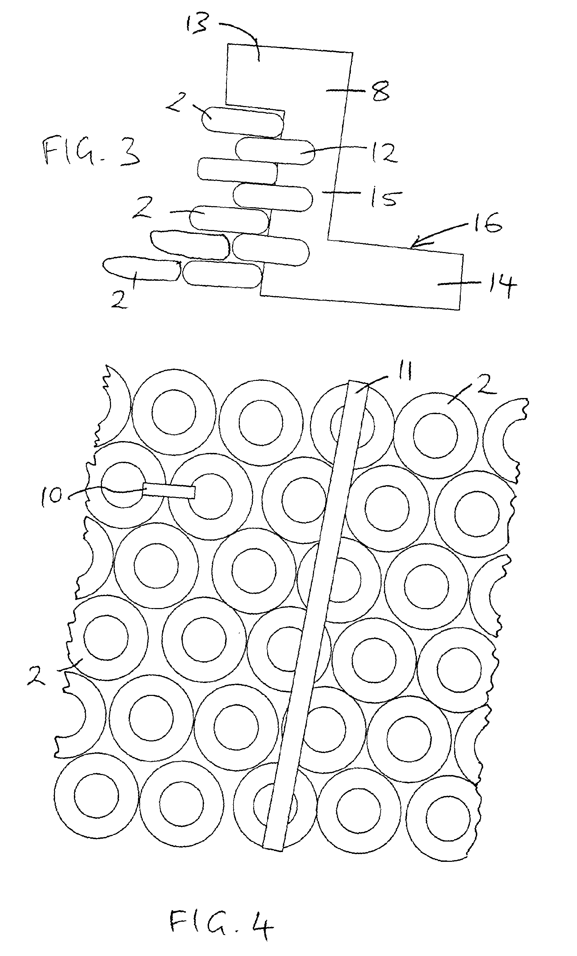

The method of forming the shuttering 1 shown in Figure 1 will now be described. A wall of used vehicle tyres 2 is formed one layer at a time, each layer being over twenty tyres wide and over fifty tyres long. Before the first layer of tyres is laid down, anchor pieces (not shown in Figure 1) are laid down in a row of anchor pieces defining the front of the wall of tyres to be built. Figure 3 shows an example of such an anchor piece 8 in cross-section and will be described in more detail later. Tyres in the initial layers (at least the first two layers) of the wall are secured to the anchor pieces. The tyres 2 are conveniently laid down when the tide is out. Successive layers of the wall of tyres 2 are laid down such that the tyres 2 in a adjacent layers overlap one another. The overlapping of tyres in successive layers is illustrated in Figures 2a and 2b.

Figure 2a shows, as a schematic plan view, a section of two layers of tyres 2 of the wall of the shuttering shown in Fig. 1. Figure 2b shows a corresponding schematic cross-section of Fig. 2a. As can be seen in Figure 2a, the majority of tyres 2 are laid such that the axes of respective tyres 2 in adjacent layers do not coincide. The overlap of a pair of tyres 2 in adjacent successive layers is about one third of the diameter of the tyres 2. In other words, the separation of the axes 9a, 9b of a pair of tyres 2a, 2b in adjacent layers are separated by about one third of the diameter of the tyres 2 (shown schematically only in Figures 2a and 2b, since those Figs. are not drawn to scale). Thus, the central holes defined by a pair of tyres 2a, 2b in adjacent layers overlap. Arranging the tyres 2 in such manner assist the vortex filter effect of the wall of tyres 2 as will be explained later.

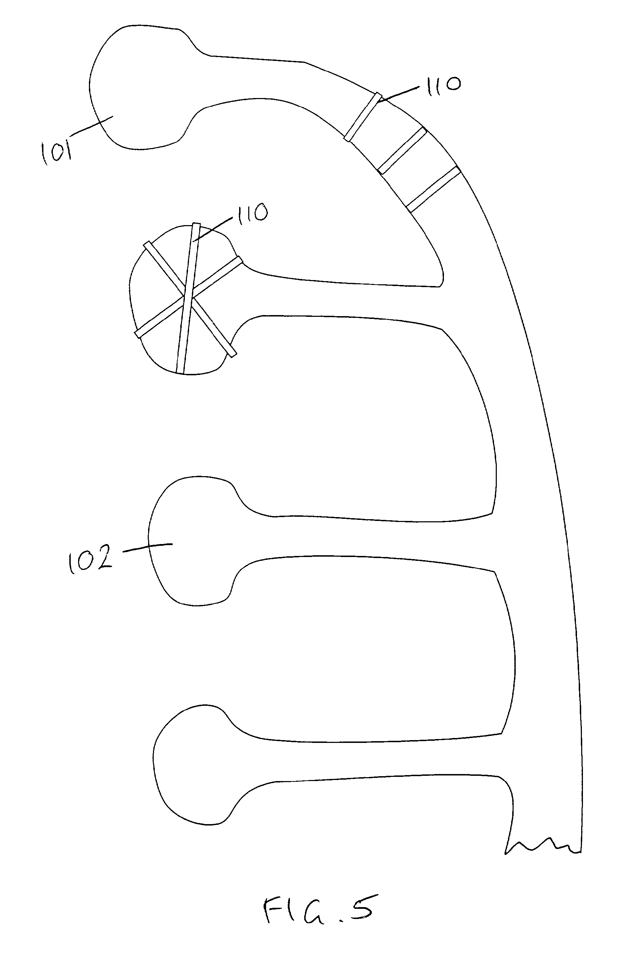

To strengthen the wall of tyres 2, straps 10 and tie bars 11 are used to tie tyres 2 together as is shown schematically in Figure 4. With reference to Fig. 4, the tyres 2 tied together may either be adjacent, such as the tyres 2 tied together by strap 10 or may be separated by a plurality of other tyres 2, such as the tyres 2 connected by the tie bar 11.

The wall, once built, is covered with a netting additionally to secure the tyres together and to prevent a given tyre from being washed away by the action of the sea.

The wall of tyres 2 acts as a vortex filter bed by slowing water as it passes over and through the tyres 2, solid matter carried by the sea water effectively being filtered by, and deposited within, the wall. The water flowing through a given tyre 2 may, for example, swirl in a vortex like manner. The tyres 2 in the wall slow water down and waterborne particulate matter is deposited as it falls through the tyres in the wall or the gaps between the tyres. The wall of tyres thus act as a filter bed. The deposition of the solid matter is greatly assisted by means of the vortex filter effect. The deposited solid matter may include sand, shingle and other waterborne debris.

The wall of tyres 2, gradually fill over time with particulate matter carried by the sea water. Over time, the wall of tyres 2 become filled to capacity with solid matter as a result of such particulate matter being deposited. Thus, the wall effectively becomes a unitary mass and thereafter ceases to act as a filter bed. The wall is then able to be used as a form of shuttering. The shuttering thus formed is built on and faced with the concrete facing units 7.

The wall of tyres 2 illustrated in Figure 1 is over thirty tyres tall and over thirty tyres wide and over four hundred tyres long (the view shown in Figure 1 is partially cut away).

The anchoring piece 8 used in the initial steps of forming the wall of tyres 2 is shown in Figure 3. The anchor piece 8 is made of concrete and has three tyres 12 formed integrally therewith. Those tyres 12 allow tyres 2 of the wall to be interlocked therewith, thereby enabling tyres 2 of the wall to be secured to the anchor piece 8. The anchor piece 8 comprises a base section 14, a vertical section 15 extending from one end of the base section 14 and an upper section 13 extending from the upper end of the vertical section 15. The tyres 12 extend from the vertical section 15 on one side and the base section 14 extends from the vertical section 15 on the other side. The anchor piece when viewed from the side (as seen in Figure 3) is generally Z-shaped. The upper surface 16 of the base section 14 is used as a foundation on which to build. The first layer of the concrete facing units 7 are laid on the upper surface 16 of the base section 14 of the anchor piece 8. Other facing units 7 are formed as pre-cast concrete blocks with tyres integrally formed therein to enable the units to be attached to the wall. Such facing units are not necessary to retain the particulate matter or to increase the structural stability of the shuttering, but are merely to improve the appearance of the structure.

Although not shown in Figure 1, steel girders are placed within the wall to give the shuttering 1 extra structural strength.

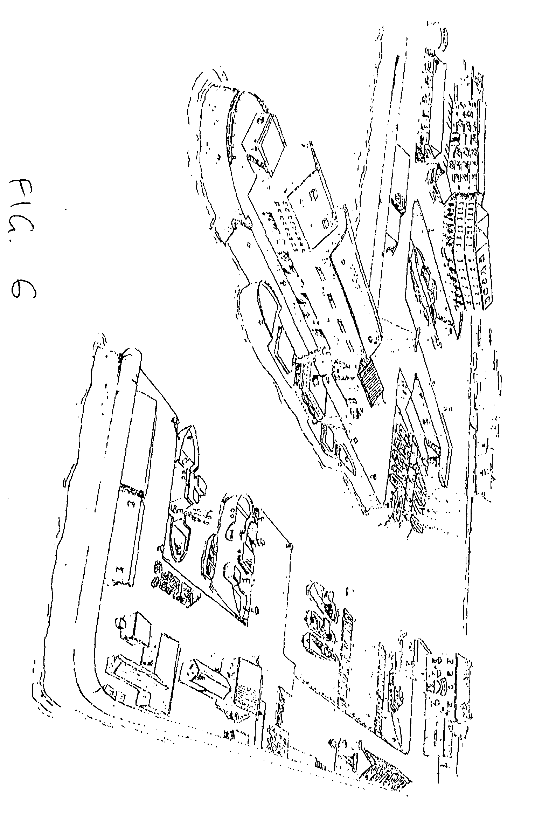

Shuttering formed in accordance with the invention may be used for various purposes. In accordance with a second embodiment of the invention, illustrated by Figure 5, a shuttering 101 is built that extends out to sea (the top of Figure 5) in the form of a marine-like structure. Such a structure contains millions of tyres 102 (those tyres not being shown individually in Fig. 5). Tie 110 are used to provide the shuttering with extra structural strength. The ties 110 are formed of metal tubing, the tubing being formed of a salt resistant metal.

As will be appreciated, Figure 5 is a highly schematic representation of a shuttering 101 used to form a foundation for a marine development. Figure 6 illustrates in perspective view the scale of such an arrangement as it would appear once developed (the shuttering 101 not being visible in Figure 6).

It will be appreciated that the above embodiments of the present invention provide a convenient and beneficial means of disposing of used vehicle tyres.

It will also be appreciated that various modifications may be made to the above-mentioned embodiments. For example, the vortex filter effect may be assisted by manually depositing particulate matter in the tyre wall. It will also be appreciated that the used tyres will most likely not be of the same size and that therefore the structure of the wall will not be as regular as might be suggested by some of the attached schematic drawings.

The amount of overlap between tyres in adjacent levels is not critical and differing degrees of overlap also allow the filter effect of the wall to operate. The straps used to tie tyres together are conveniently made of propylene but other materials can be used. Rather than using flexible netting to secure the tyres in place, more rigid meshing means may be used such as, for example, cage-like structures. Whilst it is preferred that tyres are laid down whilst the tide is out such that the tyres are not laid in water, it is of course possible to form a shuttering in accordance with the present invention by laying the tyres in water.

The shuttering need not be built using used vehicle tyres. Other components could be used to form a wall that is then filled with particulate matter, for example by the vortex filter effect mentioned above. For example, structures similar in shape and size to tyres could be used.

Rather than building a shuttering on the coast, shuttering may be formed in other bodies of moving water such as rivers or the like.

## Claims

1. A method of forming a shuttering in moving water including the step of laying down a wall of vehicle tyres, the wall being at least ten tyres wide and at least five tyres tall, at least a significant fraction of the free space within the tyres of the wall subsequently being filled with solid matter.

2. A method according to claim 1, wherein the solid matter is particulate matter.

3. A method according to claim 2, wherein the location of the shuttering and the arrangement of the tyres and the wall are so chosen that the wall is at least partially filled with particulate matter carried by water.

4. A method according to claim 1 or claim 2, wherein the method includes a step of manually filling the wall with solid matter.

5. A method according to any preceding claim, wherein the tyres are so arranged that there are a multiplicity of pairs of tyres, wherein one tyre of each pair is arranged immediately above the other tyre of the pair, the respective axes of the tyres being spaced apart from one another by a distance between 10% and 40% of the sum of the diameters of the pair of tyres.

6. A method according to any preceding claim, wherein the method includes a step of placing netting over a multiplicity of tyres thereby restricting their movement.

7. A method according to any preceding claim, wherein the method includes a step of laying down an anchor unit comprising a heavy body having connecting means for enabling tyres to be secured thereto.

8. A method according to claim 7, wherein the anchor unit includes a foundation on which further constructions may be built.

9. A method according to any preceding claim, wherein the wall includes a substantially vertically arranged girder.

10. A method according to any preceding claim, further including a step of fixing pre-formed facing units to at least a portion of the wall, thereby forming an exterior facing.

11. A method of disposing of waste vehicle tyres comprising the steps of performing a method according to any of the preceding claims.

12. A shuttering comprising a wall of vehicle tyres, the wall being at least ten tyres wide and at least five tyres tall, at least a significant fraction of the free space within the wall being filled with solid matter, wherein at least a part of the shuttering is under water.

13. A shuttering according to claim 12, wherein the shuttering has been built according to the method of any of claims 1 to 11.

14. Anchor unit for use in a method according to claim 7 or claim 8.
